Europäisches Patentamt

European Patent Office

Office européen des brevets

(19)

(11) **EP 0 325 441 B1**

(12) ## EUROPEAN PATENT SPECIFICATION

(45) Date of publication and mention
of the grant of the patent:
**09.04.1997 Bulletin 1997/15**

(51) Int Cl.[6]: **G01N 25/18**

(21) Application number: **89300473.9**

(22) Date of filing: **18.01.1989**

(54) **A method for measuring thermal conductivity**

Verfahren zur Messung der thermischen Konduktivität

Méthode pour la mesure de la conductivité thermique

(84) Designated Contracting States:
**DE FR GB IT**

(30) Priority: **18.01.1988 JP 7801/88**
**18.01.1988 JP 7802/88**
**21.09.1988 JP 236727/88**

(43) Date of publication of application:
**26.07.1989 Bulletin 1989/30**

(73) Proprietor: **Ishikawajima-Harima Heavy**
**Industries Co., Ltd.**
**Tokyo 100 (JP)**

(72) Inventor: **Tsuchida, Yoshiki**
**Tama-shi Tokyo (JP)**

(74) Representative: **Hackett, Sean James et al**
**MARKS & CLERK,**
**57-60 Lincoln's Inn Fields**
**London WC2A 3LS (GB)**

(56) References cited:
**US-A- 3 263 485**          **US-A- 4 259 859**

- **JOURNAL OF NUCLEAR SCIENCE AND TECHNOLOGY, vol. 13, no. 9, September 1976, pages 508-516; K. NAITO et al.: "Measurement of thermal conductivity and diffusitivity by means of scaning temperature method"**

**Description**

Background of the Invention

This invention relates to a measurement method for thermal conductivity under steady state conditions at high temperatures which can be appropriately applied to various kinds of materials such as heat insulating materials.

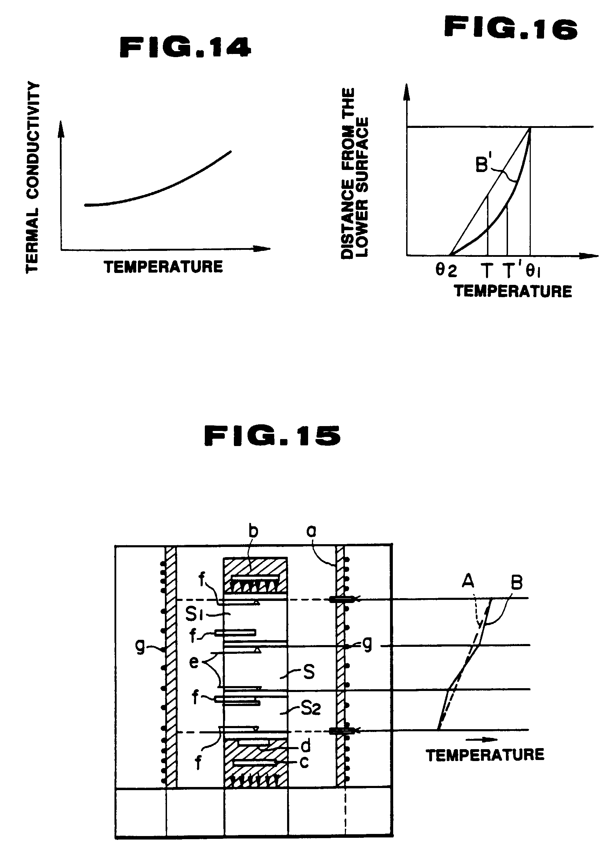

In general, the thermal conductivity of insulating materials varies depending on the temperature. As shown in Figure 14, it is a general characteristics that the higher the temperature, the higher the heat conductivity. In other words, heat is more easily conducted through a material at a higher temperature than at lower temperature. For heat insulating materials to be used at over 1,000°C, it is necessary to test them at the temperatures at which they will be used.

A conventional method for measurement of thermal conductivity is prescribed in ASTM C177-84 etc., for example, as shown in Figure 15. A conventional apparatus for measuring thermal conductivity consists of a main heater b and an auxiliary heater c which are disposed respectively in the upper and lower parts of the enclosure a and are designed to generate a downward steady heat flow. A heat flow meter d is disposed above the auxiliary heater c and is used to measure the steady heat flow.

When thermal conductivity is measured with this conventional apparatus, specimen S is first placed at the center of the enclosure a, and standard heat transfer plates S1 and S2 of known thermal conductivity are positioned on and under the specimen S. Second, the main heater b and the auxiliary heater c are controlled to create a steady state heat flow in the enclosure. The average temperature of specimen S is maintained at the temperature T°C at which the heat conductivity is to be measured whereas the temperature within the specimen varies as shown in Fig. 15.

Next, the steady state temperatures of the upper and lower surfaces of the specimen S are accurately measured with thermometers e. The thermal conductivity of the specimen S at temperature T °C (the average temperature of specimen S) can then be calculated from the temperature difference between the upper and lower surfaces of the specimen S and the value of the steady state heat flow which is measured by a heat flow meter d.

The following equation relates the heat flow Q (Kcal/h) at a state where the temperatures at the upper and lower surfaces of specimen S are, $\theta_1$ and $\theta_2$ respectively, the thickness $\delta$ (meters) of specimen S, the effective area A (square meters) of specimen S, and the thermal conductivity $\lambda$ (Kcal/m·h·deg) at temperature T °C.

$$Q = (\lambda/\delta)\cdot A(\theta_1 - \theta_2)$$

From this formula, the following equation can be obtained:

$$\lambda = Q\cdot\delta/A(\theta_1 - \theta_2) \tag{1}$$

The standard heat transfer plates S1 and S2 in the above mentioned conventional thermal conductivity measurement apparatus are designed to keep the specimen S at a high temperature as well as to check the thermal conductivity of the specimen against the known thermal conductivity of the standard heat transfer plates S1 and S2. This thermal conductivity can be obtained from the surface temperatures which are measured by thermometers f, and heat flow Q.

Heaters g for compensating the temperature of the inner surface of the enclosure 'a' maintain the surface temperature as shown by the line B in Fig. 15. Thus, the heat transfer between enclosure 'a' and its internal space is suppressed. This arrangement is for the purpose of preventing the heat flow through the peripheral part of the enclosure.

It is rather difficult or impossible at higher temperatures to conduct accurate measuring of thermal conductivity of a specimen with the conventional measuring apparatus since its surfaces are in contact with the standard heat transfer plates and thermocouples are used for temperature measuring. This limits the temperature at which the apparatus is used.

It is possible to remove the upper standard heat transfer plate, but the lower standard heat transfer plate cannot be removed because the plate is indispensable in keeping the heat flow meter d at a lower temperature when the measuring temperature is very high.

In the above mentioned case, the upper surface temperature $\theta_1$ of specimen S should be set slightly higher than measuring temperature T and the lower surface temperature $\theta_2$ should be set slightly lower than temperature T. The mean temperature of $\theta_1$ and $\theta_2$ is then considered to be the average internal temperature of specimen S and can be regarded as the measuring temperature T at which the measuring will be conducted. In other word, the values of $\theta_1$ and $\theta_2$ are each kept at a point which satisfies the following formula.

...

EP 0 325 441 B1

$$T = (\theta_1 + \theta_2)/2$$

The assumption that mean temperature of the upper and lower surfaces is the internal mean temperature of specimen S is valid as long as the thermal conductivity of specimen S is constant and its internal temperature changes rectilinearly between $\theta_1$ and $\theta_2$ as shown as B in Figure 15.

However, in reality, the thermal conductivity of specimen S, varies according to temperature. Therefore the internal temperature does not change rectilinearly, but makes a curvilinear change shown as "B'" in Figure 16.

For large temperature differences between $\theta_1$ and $\theta_2$ there is a big difference between the internal mean temperature T, obtained by assuming the simple average of $\theta_1$ and $\theta_2$, and the actual internal mean temperature T. Thus the simple average temperature of the two surfaces does not represent the overall mean temperature of specimen S. However, if the temperature difference between $\theta_1$ and $\theta_2$ is small, the change of temperature can be regarded as a rectilinear change and the difference between the two values of temperatures T and T' can be disregarded.

However, if the temperature difference is too small, other problems will arise. Decreasing the amount of temperature difference makes it necessary to reduce the thickness of specimen S. The decrease in temperature difference however makes it more difficult to maintain the temperature difference between the upper and lower surfaces of specimen S constant. Furthermore, temperature measurement errors will cause a magnification of the error in the results, when the temperature difference is very small. For these reasons, it is virtually always the case that a large temperature difference is employed according to the conventional thermal conductivity measuring apparatus.

Summary of the Invention

The object of the present invention is to provide an accurate, easy method for measuring the thermal conductivity of a specimen at any desired temperature. According to the present invention, there is provide a method for measuring thermal conductivity of a material as defined in claim 1 below.

Brief Description of the Figures

Figure 1 is a vertical sectional view of a thermal conductivity measuring apparatus.

Figure 2 is a schematic view which defines the parameters for measuring thermal conductivity of standard heat transfer plates.

Figure 3 shows the relationship between thermal conductivity and surface temperatures of standard heat transfer plates.

Figure 4 defines the parameters for measuring thermal conductivity of a specimen laid on a standard heat transfer plate.

Figure 5 is a vertical sectional view of a means for measuring thermal conductivity based on a first embodiment of this invention.

Figure 6 shows the internal temperature distribution of a specimen based upon the first embodiment of this invention.

Figure 7 shows the surface temperature of a specimen based upon a second embodiment of this invention.

Figures 8 and 9 show the internal temperature distribution of specimen based upon the second embodiment of this invention.

Figure 10 shows a functional relationship between the upper surface temperature and thermal conductivity of a specimen.

Figure 11 is a view used to explain the correction of measurement errors which arise due to radial heat flow in the above mentioned embodiments of this invention.

Figure 12 is an enlarged view of a part of Figure 11.

Figure 13 is a view used to explain the correction of measurement errors which arise due to heat transfer between heat flow meters and the auxiliary heater.

Figure 14 shows the relationship between thermal conductivity and temperatures of various materials.

Figure 15 is a vertical sectional view which shows a schematic structure of a conventional means of measuring thermal conductivity.

Figure 16 shows an internal thermal state of a specimen when the thermal conductivity of the specimen is being measured.

Detailed Description of Preferred Embodiments of this Invention

Embodiments of this invention will be described in detail referring to the figures.

3

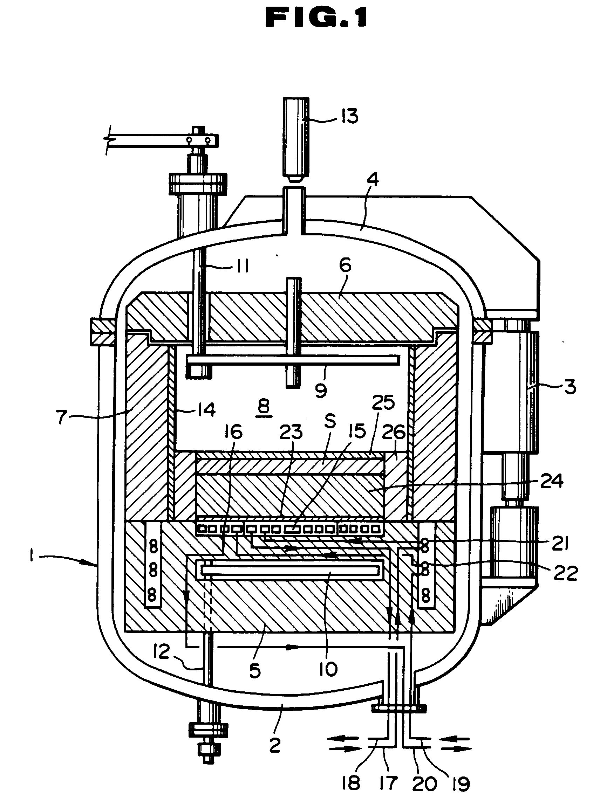

First, however, a comparative method will be explained referring to Figures 1 to 4.

Figure 1 is a vertical sectional view of a thermal conductivity measuring apparatus which is appropriately used to illustrate the comparative method. In this figure, housing 1 consists of a main body 2 and a cap 4 which is connected to the main body 2 with a hinge 3. The main body 2 has a water cooled jacket.

In the main body 2, measuring chamber 8 is defined by a lower heat insulator 5 and an upper heat insulator 6 and a cylindrical heat insulator 7. A main heater 9 is installed at the upper part of the measuring chamber 8 in order to keep the internal temperature of the chamber at a particular temperature.

In the lower heat insulator 5, an auxiliary heater 10 is embedded to keep the internal temperature of the lower heat insulator at the same temperature as the heat flow meter 15 (to be described later). Electric terminals 11 and 12, passing through the cap 4 and the main body 2, are connected to the main heater 9 and the auxiliary heater 10, respectively. A radiation type thermometer 13 is used to measure the internal temperature of the measuring chamber 8.

The internal surface of the cylindrical heat insulator 7, which forms the side walls of the measuring chamber 8, is coated with a heat compensating plate 14 which is made of a material with sufficient heat resistance and high thermal conductivity, such as graphite, heat resistant steel or molybdenum.

The high thermal conductivity of the heat compensating plate 14 allows the heat to flow downward from the chamber 8, maintaining a temperature distribution similar to that through the specimen S and also through the standard heat transfer plate 24. The internal temperature of the cylindrical heat insulator 7 can therefore be kept the same as that of specimen S or standard heat transfer plate 24 (described later). Moreover, a heater g which is used in a conventional measuring means (Fig. 15) for the purpose of temperature compensation of the side walls is not necessary, and thus the structure can be simplified and its size can be reduced.

At the center of the lower heat insulator 5, a disc-shaped heat flow meter 15 is positioned with a ring-shaped auxiliary cooling plate 16 disposed around its periphery. A spiral passage is formed inside the heat flow meter 15 so as to measure the heat flow. A lead-in duct 17 and lead-out duct 18 are connected to the spiral passage to carry the temperature detecting gas flow to and from the spiral passage in the direction indicated by the arrow in the figure.

Inside the auxiliary cooling plate 16, a spiral passage, through which gas coolant runs, is formed. A lead-in duct 19 and a lead-out duct 20 are connected to the spiral passage so as to carry the coolant gas to and from the spiral passage in the direction indicated by the arrow in the figure.

The heat detecting gas and the coolant gas are heated to a certain temperature by gas pre-heaters 21 and 22 which are embedded at a lower part of the heat insulator 5 and then pass to the heat flow meter 15 and the auxiliary cooling plate 16 respectively.

Although they are not illustrated in the figure, thermometers are installed in order to measure the temperatures of the two gases at the spiral passage inlet and outlet.

Heat flow meter 15 is designed to enable the quantity of heat received by the heat detecting gas to be determined, that is, the heat flow through specimen S, from the temperature difference between the detecting gas temperature at the spiral inlet and outlet, and the flow rate of the gas. The auxiliary cooling plate 16 is placed around the heat flow meter 15 and kept at the same temperature as the heat flow meter so as to prevent heat transfer between the two.

Placed upon the upper surface of the said heat flow meter 15 and the auxiliary cooling plate 16 is the lower temperature measuring plate 23. Upon the upper surface of the lower temperature measuring plate 23, the standard heat transfer plate 24, which has heat insulating properties, is placed. The specimen S is placed upon the upper surface of the standard heat transfer plate 24 for measurement of its thermal conductivity. Upon the upper surface of the specimen, upper temperature measuring plate 25 is placed.

Thermocouples are located on the top face of the lower temperature measuring plate 23 and the lower face of the upper temperature measuring plate 25 (not illustrated in the figure). The lower surface temperature of the standard heat transfer plate 24 and the upper surface temperature of specimen S are measured with these thermocouples and the upper surface temperature of the upper temperature measuring plate 25 is measured with radiation thermometer 13. Element 26 in the figure is a thermal insulator.

Next is a description of a measuring method using this apparatus.

The measuring method, which will be discussed hereafter, is an indirect way in which thermal conductivity $\lambda_s$ of specimen S at temperature T°C (Precisely, T°C is the mean temperature which is determined from $(T + t_1')/2$ for cases where the difference between T and $t_1'$ is small), is obtained by a calculation using the measured average thermal conductivity $\delta_1$ of the standard heat transfer plate 24 without measuring the lower surface temperature of the specimen S.

Standard heat transfer plate 24 is placed on the upper surface of the lower temperature measuring plate 23. The upper temperature measuring plate 25 is then, directly placed upon the upper surface of the standard heat transfer plate 24 without this specimen S. The measuring chamber 8 is closed and hermetically sealed with the upper heat insulator 6 and the cap 4 of the housing 1.

Heat conductivity of the standard heat transfer plate 24 is then be measured according to the steps described below.

The main heater 9 and an auxiliary heater 10 are adjusted in order to generate a steady heat flow in the measuring chamber 8 in the same way as the conventional means. The heat detecting gas and the gas coolant are then warmed to a certain temperature by gas pre-heaters 21 and 22 respectively. The two respective gases are passed through the heat flow meter 15 and the auxiliary cooling plate 16 to maintain the temperature of those plates at the same temperature as that of the two gases. Once a steady state condition is established, the inlet and outlet temperatures and rate of flow of the heat detecting gas through the heat flow meter 15 are measured. From the temperature difference between the inlet and outlet temperatures, flow rate and gas properties, the rate of heat flow through standard heat transfer plate 24 can be obtained.

From the value of heat flow, and the upper surface temperature and the thickness of the standard heat transfer plate 24, the average thermal conductivity of the standard heat transfer plate 24 is determined by formula (2).

With the heat flow of the standard heat transfer plate 24 referred to as $Q_1$, the lower surface temperature of the plate as $t_0$, the upper surface temperature as $t_1$, the thickness of the plate as $\delta_1$, and the average thermal conductivity of the plate at this temperature as $\lambda_1$, the value of $\lambda_1$ can be obtained by the following formula which holds for the relationship among these factors.

$$Q_1 = (\lambda_1/\delta_1)A(t_1 - t_0) \qquad (2)$$

In this case, the effective area A of the standard heat transfer plate 24 is the area of the heat flow meter 15.

The next step is to keep the lower surface temperature $t_0$ at a certain temperature while the upper surface temperature $t_1$ is heated until it becomes higher than the measurement temperature T.

While increasing the temperature in steps, the average thermal conductivity of the plate is measured at each temperature step in the same manner as described above. Based upon the measurement result, a chart is drawn of the relationship between the average thermal conductivity $\lambda_1$ and the upper surface temperature $t_1$ as shown in Figure 3 by changing the temperature of the specimen S in steps.

Since $\lambda_1$ is a function of $t_1$, it can be described as follows:

$$\lambda_1 = \phi(t_1) \qquad (3)$$

"Function $\phi$ can be determined approximately by computer processing of as much data as possible. This function differs depending upon the material of standard heat transfer plate 24.

After acquiring the values of $\lambda_1$ by means of equation (3) for different temperature (the temperatures are chosen so that they are grouped around the temperature T), specimen S is laid upon the upper surface of the standard heat transfer plate 24 and upper temperature measuring plate 25 is lain upon the upper surface of the specimen.

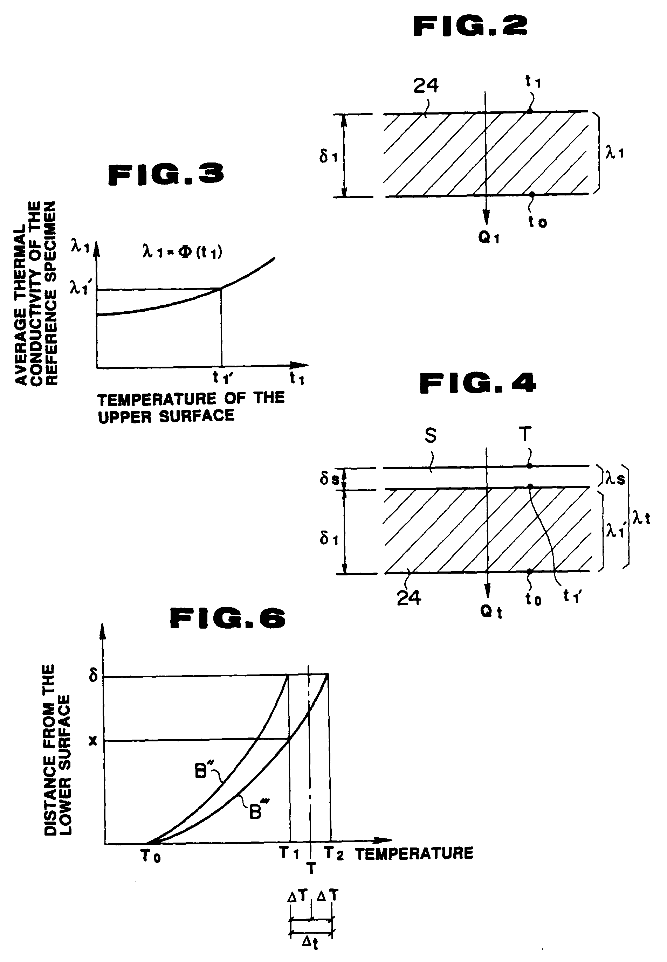

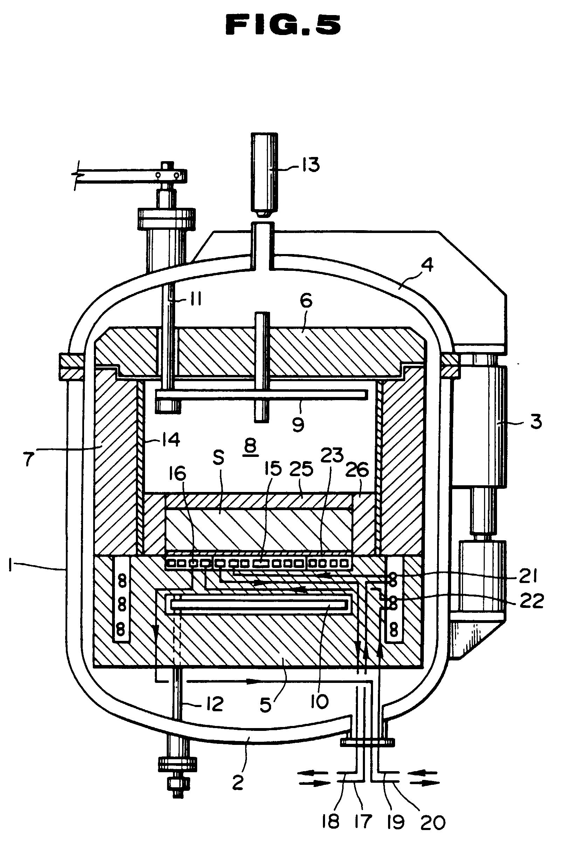

As illustrated in Figure 4, the lower surface temperature of the standard heat transfer plate 24 is kept at temperature $t_0$ and the upper surface temperature of specimen S is kept at measuring temperature T. Once steady state conditions are established, the heat flow $Q_t$ is measured.

Provided that the thickness of a specimen is referred to as $\delta_s$ and the integrated thermal conductivity of the specimen S and the standard heat transfer plate 24 are referred to as $\lambda_t$, then the following formula holds:

$$Q_t = \{\lambda_t/(\delta_1 + \delta_s)\}A(T - t_0) \qquad (4)$$

As a result of this formula, the integrated thermal conductivity $\lambda_t$ of specimen S and standard heat transfer plate 24 can be obtained.

Consider the state illustrated in Figure 4 separately for specimen S and standard heat transfer plate 24, and assume that the thermal conductivity of specimen S is $\lambda_s$, the lower surface temperature of the specimen (which is equal to the upper surface temperature of standard heat transfer plate 24) is $t_1'$, and the average thermal conductivity of the standard heat transfer plate is $\lambda_1'$, then from formula (4), because each of the two heat flows, one is through the specimen S and the other is through the standard heat transfer plate 24 is equal to the overall heat flow, the heat flow can be expressed as follows;

$$Q_t = \{\lambda_t/(\delta_1+\delta_s)\}A(T-t_0) \qquad \dots(4)$$

$$= (\lambda_1'/\delta_1)A(t_1'-t_0) \qquad \dots(4)'$$

$$= (\lambda_s/\delta_s)A(T-t_1') \qquad \dots(4)''$$

Thus the following will be obtained if Formula (4)' is equal to Formula (4)".

$$(\lambda_1'/\delta_1)A(t_1'-t_0) = (\lambda_s/\delta_s)A(T-t_1') \qquad (4)'''$$

On the other hand, the integrated heat resistance R of specimen S and standard heat transfer plate 24 in this condition can be represented as the sum of the heat resistance $R_1$ of standard heat transfer plate 24 and the heat resistance $R_s$ of specimen S; that is,

$$R_t = (\delta_1 + \delta_s)/\lambda_t$$

$$R_1 = \delta_1/\lambda_1'$$

$$R_s = \delta_s/\lambda_s$$

Hence;

$$R_t = R_1 + R_s$$

Therefore, the following holds for the factors.

$$(\delta_1+\delta_s)/\lambda_t = (\delta_1/\lambda_1')+(\delta_s/\lambda_s) \qquad (5)$$

In the above mentioned formulas, $\lambda_s$ is the final value for the thermal conductivity of specimen S at temperature T. More precisely, the thermal conductivity $\lambda_s$ corresponds to a state wherein the upper and the lower surfaces are T and $t_1'$ respectively.

Although $\lambda_1'$ and $t_1'$ are unknown values, the following relationship can be obtained because $\lambda_1'$ is the average thermal conductivity of the standard heat transfer plate 24 when the upper surface temperature is $t_1'$ and the lower surface temperature is $t_0$.

$$\lambda_1' = \phi(t_1') \qquad (3)'$$

By solving simultaneous equations of formula (3)', (4)''' and (5), the three unknown values for $\lambda_s$, $\lambda_1'$, and $t_1'$ can be obtained. This calculation will be easily conducted with a microcomputer.

In spite of obtaining the value of Function $\phi$, it is also preferable to read the values of $\lambda_1'$ and $t_1'$, which satisfy the relations of formulas (4)''' and (5), from a chart showing the relationship between the average thermal conductivity $\lambda_1$ and the upper surface temperature $t_1$ such as in Figure 3.

As described in the preceding paragraphs, with this method, the thermal conductivity $\lambda_s$ of specimen S can be obtained by calculation without measuring the lower surface temperature $t_1'$ of specimen S. It was difficult to measure the lower surface temperature of specimen S because it was laid directly upon the upper surface of standard heat transfer plate 24 in the conventional measuring means.

This measuring means can be appropriately applied for the measurement of thermal conductivity at very high temperatures in which case standard heat transfer plate 24 cannot be omitted.

In addition, the procedure for the means of measuring thermal conductivity can be simplified.

Precisely, the thermal conductivity $\lambda_s$ obtained by the above method is an average thermal conductivity at a state wherein the temperature of the upper and the lower surface of the specimen S is T°C and t'°C respectively. But, in the condition that T and t' are close to each other, the observation approximately gives a thermal conductivity at the temperature T°C.

If the same standard heat transfer plates are repeatedly used, then the average thermal conductivity is measured once at the beginning and a chart drawn similar to Figure 3 in order to obtain the function $\phi$. This makes it unnecessary to measure the average thermal conductivity of the plates every time.

The following is a description of a first embodiment of this invention referring to Figures 5 and 6.

As shown in Figure 5, a standard heat transfer plate, which is referred to as standard heat transfer plate 24 in the comparative method, is omitted from this embodiment.

Upon the upper surface of lower temperature measuring plate 23, specimen S is directly placed. And the upper temperature measuring plate 25 is placed upon the upper surface of the specimen S.

This embodiment of the invention is designed to obtain the average thermal conductivity $\lambda$ of the specimen S at the measuring temperature T°C wherein the temperature difference between the upper and lower surface of the specimen is supposed to be small, without using the standard heat transfer plate 24. The thermal conductivity $\lambda$ of the specimen S at T°C, in other words, is the thermal conductivity when the internal mean temperature of the specimen S is T°C.

In this case, the lower surface temperature of specimen S is kept at $T_0$ which is considerably lower than measuring temperature T and the upper surface temperature of specimen S is maintained at $T_1$ which is lower than T by $\Delta T$ (degrees). The value of $\Delta T$ should be as small as possible.

In the case where measurement temperature T is 2,000°C for instance, the upper surface temperature $T_1$ is controlled to be as follows with the lower surface temperature $T_0$ at 100°C and $\Delta T$ at 50 degrees.

$$T_1 = T - \Delta T = 1,950 \ °C$$

By this control, the temperature gradient is increased inside the specimen as indicated by B" in Figure 6. The average thermal conductivity $\lambda_{s1}$ of specimen S in this state will then be obtained.

Basically the heat measuring gas and coolant gas are heated up to a certain temperature by gas pre-heaters 21 and 22, in the same manner as with the comparative method, and then led to heat flow meter 15 and auxiliary cooling plate 16 in order to keep them at the same temperature.

Once the internal temperatures of measuring chamber 8 and specimen S are at a steady state or no temperature change is detected (more specifically, if the temperature change over 10 minutes is constant within -0.5 and 0.5 degrees or within -0.1 and 0.1 percent of a certain allowable value), the inlet and outlet temperatures of the heat detecting gas are measured. From the difference of the temperatures and the flow rate, the heat flow through specimen S is obtained.

The average thermal conductivity $\lambda_{s1}$ of the specimen S in this state is obtained by formula (6) using the heat flow $Q_1$, the upper and lower surface temperatures of the specimen S and the thickness $\delta$ of the specimen S.

Incidentally, effective area A of the specimen S is the area of heat flow meter 15.

$$Q_1 = (\lambda_{s1}/\delta)A(T_1 - T_0) \tag{6}$$

$$T_1 = T - \Delta T$$

Thus, average thermal conductivity $\lambda_{s1}$, in the state in which the upper surface temperature is $T_1$ and the lower surface temperature is $T_0$, can be obtained.

The next step is to raise the upper surface temperature to $T_2$ which is higher than T by $\Delta T$ (in this example, $T_2$=2,050°C).

Once a steady state is established, heat flow $Q_2$ is measured in the same manner as mentioned before and thermal conductivity $\lambda_{s2}$ is obtained in this state from formula (7).

$$Q_2 = (\lambda_{s2}/\delta)A(T_2 - T_0) \tag{7}$$

$$T_2 = T + \Delta T$$

Thus, average thermal conductivity $\lambda_{s2}$, in the state in which the upper surface temperature is $T_2$ and the lower surface temperature is $T_0$, can be obtained.

The temperature gradient which is shown as B''' in Figure 6 will increase in specimen S in this state.

Provided that the distance from this temperature gradient curve B''' to the part on the lower surface of specimen S (at which the internal temperature is $T_1$) is x, and the thickness of specimen S is divided into a part from the lower surface to x, and a part from x to the upper surface, formula (7) can be developed as follows: (Because heat flow $Q_2$ is the same in the two parts as long as they are in a steady state condition.)

$$Q_2 = (\lambda_{s2}/\delta) A (T_2 - T_0) \qquad \ldots (7)$$

$$= (\lambda_{s1}/X) A (T_1 - T_0) \qquad \ldots (7)'$$

$$= \{\lambda/(\delta - X)\} A (T_2 - T_1) \qquad \ldots (7)'''$$

Formula (7)' represents the heat balance of the part from the lower surface of the specimen to x hereof. Since the upper surface temperature (the temperature at x) is $T_1$, and the lower surface temperature $T_0$, the value of average thermal conductivity obtained hereupon is $\lambda_{s1}$ which is obtained by formula (6).

Formula (7)''' represents the heat balance of the part from x to the upper surface of the specimen. Since the upper surface temperature is $T_2$ and the lower surface temperature (the temperature at x) is $T_1$, the value of thermal conductivity $\lambda$ is the final value for the thermal conductivity.

Provided that formula (7) = formula (7)', the following will be obtained.

$$X = (\lambda_{s1}/\lambda_{s2}) \cdot \delta \cdot (T_1 - T_0)/(T_2 - T_1) \qquad (8)$$

Provided that formula (7)' = formula (7)'' substituting into formula (8) gives;

$$\lambda = \lambda_{s2} \cdot (T_2 - T_0)/(T_2 - T_1) - \lambda_{s1} \cdot (T_1 - T_0)/(T_2 - T_1) \qquad (9)$$

$$T_2 - T_1 = 2\Delta T = \Delta t$$

$$T_1 = T_2 - \Delta t$$

On the other hand, if $T_2 - T_1 = 2\Delta T = \Delta t$, then $T_1 = T_2 - \Delta t$. Substituting them into formula (9), the following will be obtained.

$$\lambda = \lambda_{s2} \cdot (T_2 - T_0)/\Delta_t - \lambda_{s1} \cdot \{(T_2 - T_0)/\Delta t - 1\} \qquad (9)'$$

With formula (9) or (9)', average thermal conductivity $\lambda$ in the state in which the upper surface temperature is $T_2$ and the lower surface temperature is $T_1$, can be obtained.

There will be no problem if the simple mean temperature of $T_1$ and $T_2$ is regarded as the internal mean temperature of specimen S because the difference between $T_1$ and $T_2$ is sufficiently small.

Thus, the value of $\lambda$ which is obtained by formulas (9) and (9)' can be considered to be the value of thermal conductivity at $T = (T_1 + T_2)/2$.

As described in the preceding paragraphs, in this embodiment of the invention, average thermal conductivity $\lambda_{s1}$ is measured at upper surface temperature $T_1$, which is slightly lower than the measuring temperature and $\lambda_{s2}$ at $T_2$, which is slightly higher than the measuring temperature while the lower surface of the specimen is kept at $T_0$ which is considerably lower than the measuring temperature, From the values of $\lambda_{s1}$ and $\lambda_{s2}$, thermal conductivity $\lambda$ is dalculated

for measuring temperature T. Thus an accurate measurement of temperature can be achieved without use of the standard heat transfer plate 24 of the comparative method. This accuracy of measurement makes it possible to obtain easily and precisely the value of thermal conductivity $\lambda$ at any desired measuring temperature T.

What is more, since actual measurement is carried out in such a state that a big difference between the upper and lower surface temperatures is ensured, the specimen temperature can be easily controlled an measurement errors can be minimized.

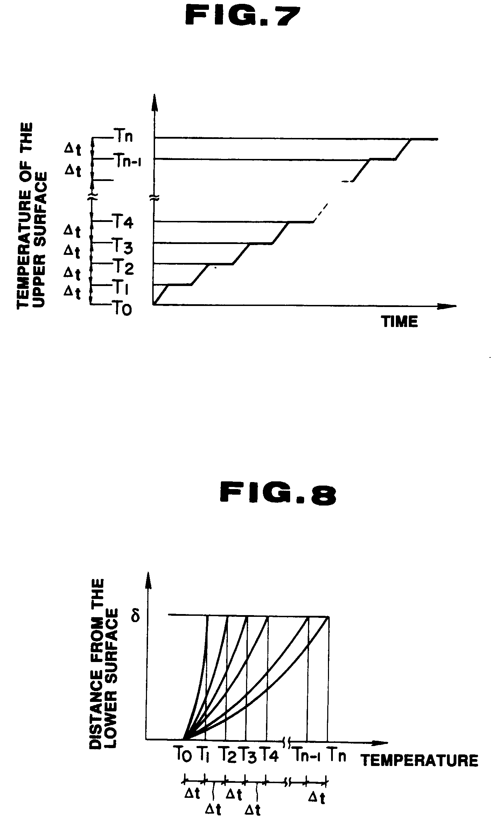

The next is a description ofa second embodiment of this invention referring to Figures 7 to 9.

The measurment steps of this embodiment are designed to basically follow those of the first embodiment; namely, the upper surface temperature is increasingly raised by $\Delta t$ degree from $T_0$, $T_1$, $T_2$ ... up to $T_n=T_0+N\ \Delta T$, whereas the lower surface temperature is kept at the same temperature $T_0$.

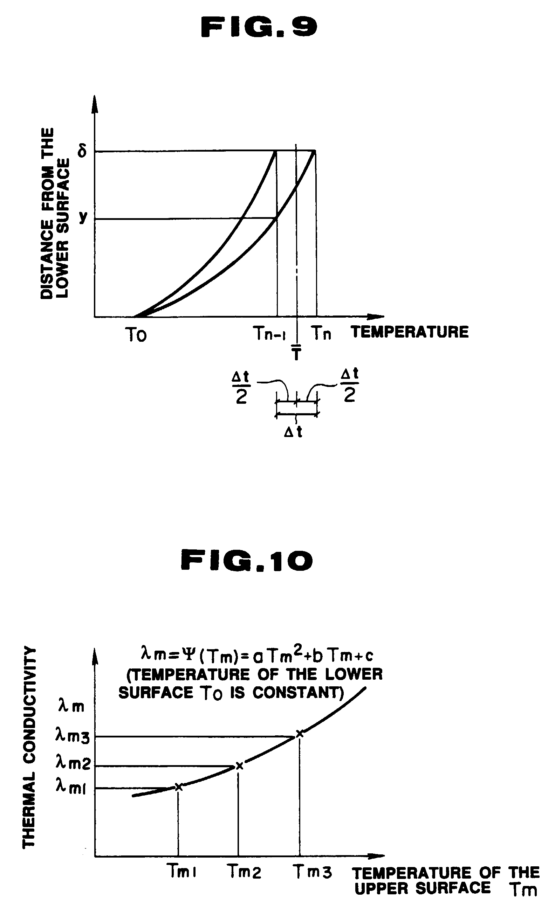

Under this control of temperature, temperature gradient will gradually rise inside specimen S as shown in Figure 8.

In this case, the lower surface temperature of the specimen is $T_0$ and the upper surface temperature is $T_{n-1}=T_0+$ (N-1) $\Delta t$ at (N-1)th measurement as shown in Figure 9. Thus the difference between $T_0$ and $T_{n-1}$ is (N-1)$\Delta t$. Provided that the heat flow is designated as $Q_{n-1}$ and the average thermal conductivity as $\lambda_{n-1}$, the following formula will hold for $Q_{n-1}$ and $\lambda_{n-1}$:

$$Q_{n-1} = (\lambda_{n-1}/\delta)A\cdot(N-1)\Delta t \tag{10}$$

Since the lower surface temperature remains $T_0$s and the upper surface temperature is $T_n=T_0+N\Delta t$ at the n-th measurement, the difference of the two temperatures will be $N\Delta t$. Provided that the heat flow is designated as $Q_n$ and the average thermal conductivity as $\lambda_n$, the following formula will hold for the two.

$$Q_n = (\lambda_n/\delta)A\cdot N\Delta t \tag{11}$$

In the state of the n-th measurement, should the distance (from the lower surface to a part where the internal temperature of a specimen is the same as the previous temperature $T_{n-1}$) be designated as y and the thickness of a specimen be divided into two parts, namely one from the lower surface to y and the other from y to the upper surface, then formula (11) can be developed in the same way as formulas (7)' and (7)"

$$\begin{aligned}
Q_n &= (\lambda_n/\delta)\,A\cdot N\Delta t &&....(11)\\
&= (\lambda_{n-1}/y)\,A\cdot(N-1)\Delta t &&....(11)'\\
&= \{\Lambda_n/(\delta-y)\}A\cdot\Delta t &&....(11)"
\end{aligned}$$

$\Lambda_n$ means that the upper surface temperature is $T_n=T_0+N\Delta t$ and the lower surface temperature (which is the temperature at y) is $T=T_0+(N-1)\Delta t$. Thus the thermal conductivity, with the temperature difference $\Delta t$ and the simple mean temperature is $\overline{T}_n=(T_{n-1}+T_n)/2$, is the final value to be obtained.

Solving the above mentioned formulas, the following will be obtained.

$$y = (\lambda_n/\lambda_{n-1})(1-1/N)\delta \tag{12}$$

Hence,

$$\Lambda_n = N\cdot\lambda_n-(N-1)\cdot\lambda_{n-1} \tag{13}$$

In other words, the average thermal conductivity, while the upper surface temperature is $T_n$s and the lower surface temperatures $T_{n-1}$, will be obtained from the measurement results $\lambda_n$ of the n-th measurement and $\lambda_{n-1}$ of the (N-1)th measurement.

In addition, the following formulas can be established.

$$\bar{T}_n = (T_{n-1} + T_n)/2$$

$$= T_{n-1} + \Delta t/2$$

$$= T_n - \Delta t/2$$

The value of $T_n$ can be regarded as the internal mean temperature of a specimen by reducing $\Delta t$ or by reducing the difference between $T_{n-1}$ and $T_n$.

With this measuring method of the second embodiment, thermal conductivity of a specimen at various temperatures can be easily obtained. By minimizing the value of $\Delta t$, a continuous graph as shown in Figure 14 can be created to show the relationship between thermal conductivity and temperatures.

Just as in the first embodiment (since actual measurement is conducted by setting lower surface temperature $T_0$ of a specimen at a sufficiently low temperature and maintaining a large temperature differential) it is easy to maintain the temperature of a specimen thus measurement errors will be reduced.

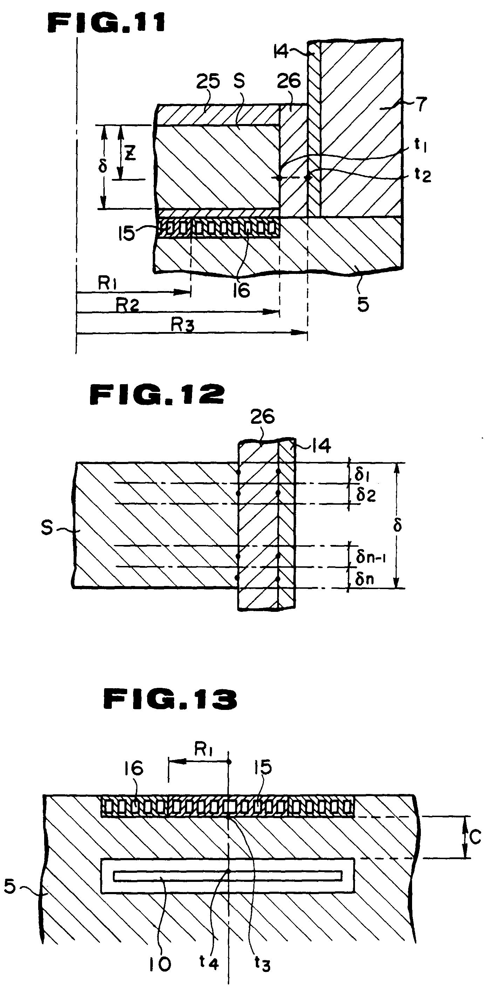

In the following paragraphs, a third embodiment of this invention will be described referring to Figure 10.

As for obtaining the thermal conductivity $\lambda$ of specimen S at calculation temperature T°C, this method of the third embodiment also keeps the lower surface temperature of specimen S at $T_0$ which is considerably lower than calculation temperature T in the first and second embodiments. On the other hand, upper surface temperature $T_m$ of specimen S is set substantially higher than lower surface temperature $T_0$ and measured at least three times. Applying formula (9) which was introduced in the first embodiment, this method is designed to obtain the thermal conductivity La at calculation temperature T by calculation.

When the lower surface temperature of specimen S is designated as $T_0$, and the upper surface temperature Tm is set at a desired temperature $T_{m1}$, the heat flow $Q_{m1}$ is measured in that state and the average thermal conductivity $\lambda_{m1}$ can then be determined based on the value of $Q_{m1}$ and by the following formula:

$$Q_{m1} = (\lambda_{m1}/\delta)A(T_{m1} - T_0) \tag{14}$$

The upper surface temperature $T_m$ is then changed to a desired temperature $T_{m2}$ while the lower surface temperature is maintained at $T_0$. Then heat flow $Q_{m2}$ is measured in that state and average thermal conductivity $\lambda_{m2}$ can be obtained by the following formula as described in the preceding paragraph.

$$Q_{m2} = (\lambda_{m2}/\delta)A(T_{m2} - T_0) \tag{14}'$$

The upper surface temperature $T_m$ is then changed to a desired temperature $T_{m1}$ through $T_{m3}$ while the lower surface temperature is maintained at $T_0$. $T_{m1}$ through $T_{m3}$ are determined so as to be sufficient to plot the graph shown in Figure 10. Then the heat flow $Q_{m3}$ is measured and the average thermal conductivity $\lambda_{m3}$ is obtained by the following formula.

$$Q_{m3} = (\lambda_{m3}/\delta)A(T_{m3} - T_0) \tag{14}''$$

The three different temperatures of the upper surface of the specimen $T_{m1}$, $T_{m2}$ and $T_{m3}$ should be set considerably higher than the lower surface temperature $T_0$, for example, at an appropriate temperature such that the graph described in Fig. 10 can be applied near the calculation temperature T. Likewise, the differences among them can be freely chosen.

Based upon the measurement results obtained as described above, a graph is drawn with the upper surface temperature of specimen S as abscissa, and average thermal conductivity $\lambda_m$ as ordinate, and a quadratic function which represents the relationship between $\lambda_m$f and $T_m$.

$$\lambda_m = \Psi(T_m) = aTm^2 + bTm + c \tag{15}$$

For this formula, the values of a, b, and c are determined by the least squares approximation method.

Once function $\Psi$ is determined, when the lower surface temperature is set at $T_o$ and the upper surface temperature $T_n$ is variable, the average thermal conductivity can be obtained by formula (15) or read from Figure 10.

In the case where the lower surface temperature is $T_0$ and the upper surface temperature is $T_1$, the average thermal conductivity $\lambda_{s1}$ is thus obtained by formula (16).

$$\lambda_{s1} = aT_1{}^2 + bT_1 + c \qquad (16)$$

The average thermal conductivity $\lambda_{s2}$ with lower surface temperature $T_0$ and upper surface temperature $T_2$ is obtained by the following formula.

$$\lambda_{s2} = aT_2{}^2 + bT_2 + c \qquad (17)$$

Substituting the values of $\lambda_{s1}$ and $\lambda_{s2}$ into formula (9), which is used to obtain thermal conductivity $\lambda$, in the case where the lower surface temperature is $T_1$, and the upper surface temperature is $T_2$, the following formula can be obtained:

$$\lambda = a(T_2{}^2 + T_2T_1 + T_1{}^2) + (b - aT_0)(T_2 + T_1) + (c - bT_0) \qquad (18)$$

By this formula, the thermal conductivity $\lambda$ where the lower surface temperature is $T_1$, and the upper surface temperature is $T_2$ (in which case the internal mean temperature of specimen S is the calculation temperature T), can be calculated from only the values of $T_1$ and $T_2$, the values of a, b and c in function $\Psi$ of formula (15), and the value of lower surface temperature $T_0$ of specimen S obtained during the measurement for determining the function $\Psi$.

Once function $\Psi$ is determined, it will not be necessary to measure the upper surface temperature near calculation temperature T. The value of the thermal conductivity $\lambda$ at the calculation temperature T can be calculated by formula (18).

The value of thermal conductivity $\lambda$, the final goal of this measuring method, is the value when the difference between $T_1$ and $T_2$ is infinitely small; that is, in the case where $T_2$ is nearly equal to $T_1 = T$. By substituting $T_2 = T_1 = T$ into formula (18), the following formula can be obtained:

$$\lambda = 3aT^2 + 2(b - aT_0)T + (c - bT_0) \qquad (19)$$

By this formula (19), the thermal conductivity $\lambda$ of specimen S at calculation temperature T can be obtained.

A subsequent calculation of $\lambda$ at any desired temperature T can be carried out by formula (19). Since a graph similar to Figure 14 can be easily drawn from the formula, the thermal conductivity $\lambda$ at the desired calculation temperature T can be read from the graph.

As described in the preceding paragraphs with the measuring method of this embodiment, thermal conductivity is measured three times by changing the upper surface temperature $T_m$ while keeping the lower surface temperature at the same temperature $T_0$. Based upon the results of the three measurements, function $\Psi$, which represents the relationship between the upper surface temperature T and thermal conductivity $\lambda$ can be determined. The thermal conductivity $\lambda$ at a desired calculation temperature T can finally be calculated based upon the determined function $\Psi$. Thus the value of thermal conductivity $\lambda$ at any desired calculation temperature T can be easily and accurately obtained.

Because the measurement is required to be done only three times in order to determine function $\Psi$, temperature control of specimen S is easy and measuring errors are limited as much as possible since the three measurements are conducted with a large temperature difference maintained between the upper and lower surfaces.

The function in the third embodiment is a quadratic function and the thermal conductivity measurement is carried out three times. However, it is not limited to a quadratic. Any type of function, a function of higher degrees or an exponential function, for instance, can be applied as long as it accurately represents the measurement results. If another type of function is applied, then measurement of thermal conductivity should be done as many times as necessary to precisely determine function $\Psi$ .

Descriptions of the embodiments of this invention are now finished.

Each step in the measuring procedures of the embodiments can be conducted manually. However, it is highly recommended to equip the measuring means of thermal conductivity with a microcomputer and to program in advance all steps of the measurement to an electronic device so that all procedures of control and calculation of average thermal conductivity from measurement values can be immediately processed by the microcomputer.

It should be noted that heat may flow from the side part of specimen S through heat insulator 26 (see Figures 1 and 5) when conducting measurement through the above described procedures with the said measuring means of thermal conductivity and that this heat flow may create measurement errors. In order to carry out more accurate measurement, the radial flow quantity is determined by measuring the internal and external temperatures of heat insulator 26, then the measured value of heat flow which is obtained by the heat flow meter 15 is corrected.

When the internal mean temperature of heat insulator 26 is designated as $t_1$, the external mean temperature of the heat insulator as $t_2$, the thermal conductivity of the heat insulator as $\lambda b$, the inside diameter as $R_2$, the outer diameter as $R_3$, and the thickness of specimen S as $\delta$, heat quantity Qb which affects the area of specimen S within effective diameter $R_1$ as heat flow from the side part of specimen S through heat insulator 26, will be represented as follows:

$$Qb = \{\lambda_b/(R_3-R_2)\}(R_1/R_2)^4 \cdot 2\pi Rm\delta(t_1-t_2)$$

However,

$$Rm = (R_3-R_2)/\ln(R_3/R_2)$$

Thus the value of Qb should be corrected in accordance with the value of the heat flow which is obtained by the heat flow meter 15.

Since the internal and external temperatures of heat insulator 26 are not uniform in the direction of the thickness of specimen S, it is preferable to measure the internal and external temperatures at points located at 2/3 or 3/4 of the thickness of specimen S ($z=(2/3 \ 3/4)\delta$) from the upper surface of the specimen and to designate the temperatures as internal mean temperature $t_1$, and external mean temperature $t_2$ so as to represent the overall temperature of heat insulator 26.

To be more exact, as shown in Figure 12, it is recommended to divide heat insulator 26 into several parts with thicknesses of $\delta_1, \delta_2, ..., \delta_n$ and to measure the internal and external temperatures of each part. Based upon these temperatures, Qb' can be obtained.

Provided that the internal temperature of each part is designated as $t_{1n}$ and the external temperature as $t_{2n}$, then Qb' will be represented as follows:

$$Qb' = \{\lambda_b/(R_3-R_2)\}(R_1/R_2)^4 \cdot 2\pi Rm\{\Sigma\delta_n(t_{1n}-t_{2n})\}$$

However,

$$Rm = (R_3-R_2)/\ln(R_3/R_2)$$

Another possible reason for measurement errors is heat transfer which arises between heat flow meter 15 and auxiliary heater 10 due to the temperature difference between the two.

For the purpose of preventing these errors, it is preferable to measure the inlet and outlet temperatures of the heat detecting gas to and from the heat flow meter 15, in order to adjust the mean temperature of the inlet and outlet temperatures to become the same as that of the auxiliary heater 10. With this procedure, the heat transfer may be prevented or the following correction can be applied.

As shown in Figure 13, the quantity of heat transfer Qc between heat flow meter 15 and auxiliary heater 10 will be as follows, providing the thermal conductivity of heat insulator 5 is $\lambda c$, the thickness of the heat insulator is C, the diameter of the heat flow meter 15 is $R_1$, the lower surface temperature of the heat flow meter is $t_3$, and the surface temperature of auxiliary heater 10 is $t_4$:

$$Qc = (\lambda_c/C)\pi R_1^2(t_3-t_4)$$

For the correction, calculate Qc by measuring $t_3$ and $t_4$, then correct the value of Qc in accordance with the heat flow quantity which is obtained by the heat flow meter 15.

Furthermore, lower surface temperature $T_0$ of specimen S is always maintained at a fixed temperature regardless of the upper surface temperature. For this purpose, the quantity of heat detecting gas led into heat flow meter 15 should be adjustable. Thus the gas flow quantity can be controlled so as not to allow the temperature of heat detecting gas to increase excessively due to heat reception from specimen S.

The temperature rise should be limited within 5 to 10 degrees because minimum measurement errors arise within that range.

In the above preferred embodiments, the coolant to circulate through the heat flow meter was a gas. However any fluid such as water or oil may be employed instead of the gas.

**Claims**

1. A method for measuring thermal conductivity of a material at a stationary state at an arbitrarily chosen calculation temperature which is hereinafter referred to as temperature T, the method comprising the steps of:

   (a) preparing a specimen of the material having first and second surfaces at least substantially parallel to each other, thickness defined by the first and the second surfaces being substantially constant, a sectional area substantially parallel to the first and the second surfaces of the specimen being substantially constant through the specimen;

   (b) measuring heat flows $Q_0$ to $Q_n$ through the specimen at thermally stationary states wherein the temperature of the first surface of the specimen is To, which is far lower than the temperature T, and the temperature of the second surface of the specimen is raised incrementally from $T_0$ to $T_n$, where $T_{n-1}$ and $T_n$ are relatively close to the temperature T and $T_n = T_0 + N\Delta T$

   (c) calculating the thermal conductivity $\lambda$ according to the following first equation by using a first average thermal conductivity $\lambda_{n-1}$ at a first state, and a second average thermal conductivity $\lambda_n$ at a second state:

$$\lambda = N\cdot\lambda_n - (N-1)\cdot\lambda_{n-1};$$

   wherein the first and second average thermal conductivities are determined on the basis of the thickness and sectional area, temperatures of the first and second surfaces, and heat flows through the specimen; and the internal mean termperature of the specimen is defined by $(T_n + T_{n-1})/2$ and substantially equal to T.

2. A method for measuring thermal conductivity of a material according to Claim 1 wherein the process of calculating the thermal conductivity includes the steps of:

   (a) estimating a function ($\Psi$) showing the relationship between the average thermal conductivity ($\lambda_m$), which is determined on the basis of the thickness and sectional area, temperatures of the first and second surfaces, and heat flows through the specimen, and the temperature of the second surface ($T_m$) by determining values of a, b, and c as specified in the second equation below by the least squares approximation method:

$$\lambda_m = \Psi(T_m) = aT_m^2 + bT_m + c;$$

   and

   (b) deriving the said first and second average thermal conductivities using the second equation.

3. A method for measuring thermal conductivity of a material according to Claim 1 wherein the step of measuring the heat flow is performed at:

   (a) a thermally stationary state wherein the temperature of the second surface T1 is slightly lower than the temperature T by $\Delta T$, and

   (b) a thermally stationary state wherein the temperature of the second surface T2 is slightly higher than the temperature T by $\Delta T$.

   (c) calculating the thermal conductivity $\lambda$ according to the following equation by using a first average thermal conductivity $\lambda_1$, at the first state, and a second average thermal conductivity $\lambda_2$ at the second state:

$$\lambda = \lambda_2\cdot(T_2-T_0)/(T_2-T_1) - \lambda_1\cdot(T_1-T_0)/(T_2-T_1).$$

**Patentansprüche**

1. Verfahren zur Messung der Wärmeleitfähigkeit eines Materials in einem stationären Zustand bei einer willkürlich ausgewählten Berechnungstemperatur, auf die man sich hierin nachfolgend als Temperatur T bezieht, wobei das Verfahren die folgenden Schritte aufweist:

(a) Herstellen eines Probekörpers des Materials, der mindestens eine erste und eine zweite Oberfläche besitzt, die im wesentlichen parallel zueinander sind, wobei die durch die erste und die zweite Oberfläche begrenzte Dicke im wesentlichen konstant ist, und wobei eine Querschnittsfläche im wesentlichen parallel zur ersten und zur zweiten Oberfläche des Probekörpers durchgängig im Probekörper im wesentlichen konstant ist;

(b) Messen der Wärmeströme $Q_0$ bis $Q_n$ durch den Probekörper bei thermisch stationären Zuständen, wobei die Temperatur der ersten Oberfläche des Probekörpers $T_0$ ist, die weit unter der Temperatur T liegt, und wobei die Temperatur der zweiten Oberfläche des Probekörpers schrittweise von $T_0$ auf $T_n$ angehoben wird, worin $T_{n-1}$ und $T_n$ relativ nahe der Temperatur T sind und $T_n = T_0 + N\Delta T$;

(c) Berechnen der Wärmeleitfähigkeit $\lambda$ entsprechend der folgenden ersten Gleichung durch Verwendung einer ersten mittleren Wärmeleitfähigkeit $\lambda_{n-1}$ in einem ersten Zustand und einer zweiten mittleren Wärmeleitfähigkeit $\lambda_n$ in einem zweiten Zustand:

$$\lambda = N\cdot\lambda_n - (N-1)\cdot\lambda_{n-1};$$

worin die erste und die zweite mittlere Wärmeleitfähigkeit auf der Basis der Dicke und der Querschnittsfläche, der Temperaturen der ersten und der zweiten Oberfläche und der Wärmeströme durch den Probekörper ermittelt werden; und wobei die innere mittlere Temperatur des Probekörpers durch $(T_n + T_{n-1})/2$ bestimmt wird und im wesentlichen gleich T ist.

2. Verfahren zur Messung der Wärmeleitfähigkeit eines Materials nach Anspruch 1, bei dem der Vorgang der Berechnung der Wärmeleitfähigkeit die folgenden Schritte umfaßt:

(a) Einschätzen einer Funktion ($\psi$), die die Beziehung zwischen der mittleren Wärmeleitfähigkeit ($\lambda_m$), die auf der Basis der Dicke und der Querschnittsfläche, der Temperaturen der ersten und der zweiten Oberfläche und der Wärmeströme durch den Probekörper bestimmt wird, und der Temperatur der zweiten Oberfläche ($T_m$) durch Ermitteln der Werte von a, b und c zeigt, wie sie in der nachfolgenden zweiten Gleichung nach der Näherungsmethode der kleinsten Quadrate angegeben wird:

$$\lambda_m = \psi(T_m) = aT_m^{\,2} + bT_m + c;$$

und

(b) Ableiten der ersten und der zweiten mittleren Wärmeleitfähigkeit bei Verwendung der zweiten Gleichung.

3. Verfahren zur Messung der Wärmeleitfähigkeit eines Materials nach Anspruch 1, bei dem der Schritt des Messens des Wärmeflusses durchgeführt wird bei:

(a) einem thermisch stationären Zustand, bei dem die Temperatur der zweiten Oberfläche T1 um $\Delta T$ etwas niedriger ist als die Temperatur T; und

(b) einem thermisch stationären Zustand, bei dem die Temperatur der zweiten Oberfläche T2 um $\Delta T$ etwas höher ist als die Temperatur T; und wobei

(c) die Wärmeleitfähigkeit $\lambda$ entsprechend der folgenden Gleichung berechnet wird, indem eine erste mittlere Wärmeleitfähigkeit $\lambda_1$ im ersten Zustand und eine zweite mittlere Wärmeleitfähigkeit $\lambda_2$ im zweiten Zustand verwendet werden:

$$\lambda = \lambda_2\cdot(T_2 - T_0)/(T_2 - T_1) - \lambda_1\cdot(T_1 - T_0)/(T_2 - T_1).$$

**Revendications**

1.  Procédé de mesure de la conductivité thermique d'un matériau à l'état stationnaire à toute température de calcul arbitrairement choisie, qui est appelée ci-après la température T, la méthode comprenant les étapes suivantes:

    (a) préparer un échantillon du matériau ayant au moins une première et une deuxième surfaces, essentiellement parallèles l'une à l'autre, l'épaisseur définie par les première et deuxième surfaces étant essentiellement constante, une surface en coupe essentiellement parallèle aux première et deuxième surfaces de l'échantillon étant essentiellement constante dans tout l'échantillon;
    (b) mesurer les flux thermiques $Q_0$ à $Q_n$ à travers l'échantillon, dans des états thermiquement stationnaires où la température de la première surface de l'échantillon est égale à une valeur $T_0$ qui est nettement inférieure à la température T, et la température de la deuxième surface de l'échantillon est augmentée par degré de $T_0$ à $T_n$, où $T_{n-1}$ et $T_n$ sont relativement proches de la température T et $T_n = T_0 + N\Delta T$;
    (c) calculer la conductivité thermique $\lambda$ selon la première équation suivante en utilisant une première conductivité thermique moyenne $\lambda_{n-1}$ dans un premier état, et une deuxième conductivité thermique moyenne $\lambda_n$ dans un deuxième état selon la formule:

    $$\lambda = N \cdot \lambda_n - (N-1) \cdot \lambda_{n-1};$$

    où les première et deuxième conductivités thermiques moyennes sont déterminées en se basant sur l'épaisseur et la surface en coupe, les températures des première et deuxième surfaces et les flux thermiques à travers l'échantillon, tandis que la température moyenne interne de l'échantillon est définie par $(T_n + T_{n-1})/2$ et est essentiellement égale à T.

2.  Méthode de mesure de la conductivité thermique d'un matériau selon la revendication 1, dans lequel le procédé de calcul de la conductivité thermique comprend les étapes suivantes :

    (a) estimer une fonction ($\psi$) représentant la relation entre la conductivité thermique moyenne ($\lambda_m$), qui est déterminée en se basant sur l'épaisseur et la surface en coupe, les températures des première et deuxième surfaces, les flux thermiques à travers l'échantillon et la température de la deuxième surface ($T_m$) en déterminant des valeurs de a, b et c telles que définies dans la deuxième équation ci-dessous par la méthode d'approximation des moindres carrés:

    $$\lambda_m = \psi(T_m) = aT_m^2 + bT_m + c;$$

    et
    (b) dériver les première et deuxième conductivités thermiques moyennes en utilisant la deuxième équation.

3.  Méthode de mesure de la conductivité thermique d'un matériau selon la revendication 1, dans laquelle l'étape de mesure du flux thermique est effectuée de la manière suivante:

    (a) un état thermiquement stationnaire dans lequel la température de la deuxième surface T1 est légèrement inférieure à la température T, d'une valeur égale à $\Delta T$; et
    (b) un état thermiquement stationnaire dans lequel la température de la deuxième surface T2 est légèrement supérieure à la température T, d'une valeur égale à $\Delta T$;
    (c) calcul de la conductivité thermique $\lambda$ selon l'équation suivante, en utilisant une première conductivité thermique $\lambda_1$ dans le premier état et une deuxième conductivité thermique $\lambda_2$ dans le deuxième état:

    $$\lambda = \lambda_2 \cdot (T_2 - T_0)/(T_2 - T_1) - \lambda_1 \cdot (T_1 - T_0)/(T_2 - T_1).$$

# FIG.1

# FIG.2

# FIG.3

# FIG.4

# FIG.6

# FIG.5

# FIG.7

# FIG.8

# FIG.9

# FIG.10

**FIG.11**

**FIG.12**

**FIG.13**

# FIG.14

TERMAL CONDUCTIVITY

TEMPERATURE

# FIG.16

DISTANCE FROM THE LOWER SURFACE

B'

$\theta 2$  T  T' $\theta_1$

TEMPERATURE

# FIG.15

b    a

f

S1

f

g                    g

e        S

f

S2

d

f        c

A    B

TEMPERATURE